# EUROPEAN PATENT APPLICATION

(11) **EP 4 311 594 A1**
(43) Date of publication of application: **31.01.2024**
(21) Application number: 22020361.6
(22) Date of filing: 29.07.2022
(51) Int. Cl.: B01D 53/04

(54) **METHOD AND APPARATUS FOR TEMPERATURE SWING ADSORPTION**

(71) Applicant: Linde GmbH, 82049 Pullach (DE); BASF CORPORATION, Florham Park, NJ 07932 (US)
(72) Inventor: Duarte, Gabriel Salazar, 82049 Pullach (DE); Kramer, Verena, 82049 Pullach (DE); Eckardt, Tobias, 31582 Weser (DE)
(74) Representative: Lu, Jing

(57) **Abstract**

The invention proposes a method of operating a temperature swing adsorption apparatus with three adsorption vessels, the method comprising operating each of the adsorption vessels alternatingly and offset to the other adsorption vessels in: an adsorption mode, comprising passing an adsorption gas stream through at least one of the adsorption vessels on a first temperature level, thereby adsorbing components of the adsorption gas stream to one or more adsorbents inside the adsorption vessel, and generating a purified gas stream, and a regeneration mode, comprising passing, during a first regeneration period, a regeneration gas stream at a second temperature level, which is higher than the first temperature level, through the adsorption vessel, thereby desorbing the components of the adsorption gas stream previously adsorbed to the one or more adsorbents in the adsorption vessel and enriching the regeneration gas stream in these components, and thereafter passing, during a second regeneration period, a cooling gas stream at a third temperature level through the adsorption vessel, the third temperature level being higher than, the same as or lower than the first temperature level, until the adsorption vessel is cooled down sufficiently, characterized in that the regeneration gas stream is heated, during a partial phase of the first regeneration period, to the second temperature level using heat recovered from the regeneration gas stream downstream the vessel being heated in the first regeneration period. (Fig. 2)

## Description

The present invention relates to a method and an apparatus for temperature swing adsorption according to the preambles of the independent claims.

### Background of the invention

As generally known and as e.g. described in US 2015/308734 A1 of the present applicant, liquefaction and subcooling of hydrocarbon-rich gas mixtures like natural gas is typically performed using at least one pure refrigerant cycle and/or at least one mixed refrigerant cycle. In the context of gas liquefaction, clogging of process equipment, which can be caused by solidification ("freezing") of certain components, particularly of so-called heavy hydrocarbons, must be avoided.

In the field of natural gas liquefaction, heavy hydrocarbons are generally defined as hydrocarbons comprising six or more carbon atoms such as hexanes and higher, and these may also include, according to the definition used herein, hydrocarbons with five carbon atoms. Heavy hydrocarbons typically also include aromatic compounds, particularly benzene, toluene and xylene (BTX). The invention particularly relates to the treatment of gas mixtures containing such heavy hydrocarbons besides lighter hydrocarbons, particularly methane. Such gas mixtures may also contain hydrocarbons with two to four carbon atoms, particularly ethane, propane, butane, isobutane, and pentane. The latter are also referred to as natural gas liquids. Hydrocarbons with five carbon atoms may, according to the invention, be part of (unwanted) heavy hydrocarbons to be removed from a corresponding gas mixture, but they may also be considered to represent hydrocarbons to be transferred into a purified gas mixture.

Particularly, the present invention relates to treatment of natural gas but is not limited thereto. The present invention may be used in the context of other gas mixtures with the same or similar properties as just described in connection with hydrocarbon-rich gas. However, the present invention may also be used in treating other gas mixtures in which unwanted components are present, particularly mixtures such as air wherein unwanted components may include water and hydrocarbons or mixtures such as synthesis gas from steam reforming where unwanted components may likewise include water, etc. Typically, the unwanted components are condensable without using cryogenic temperatures. Corresponding gas mixtures may also include carbon dioxide as an unwanted component, which may be removed using other means such as physical or chemical scrubbing technologies and the like at an appropriate position of the overall process.

Generally, the present invention is usable in all applications where a gas mixture comprises components that may be removed by adsorption processes. Only for illustration purposes, the further description will focus on hydrocarbon-rich gas mixtures. For example, the purification of air to be processed in a cryogenic air separation unit, including a removal of water and carbon dioxide by adsorption using zeolithes, is described in H.-W. Haring (Ed.), Industrial Gases Processing, Wiley-VCH, 2006, particulary Section 2.2.5, "Cryogenic Rectification".

While unwanted components such as water may typically be removed from hydrocarbon-rich gas mixtures to be liquefied, if present, at ambient temperatures to a sufficient extent, heavy hydrocarbons are classically removed by subjecting the gas mixture to be liquefied to an initial partial condensation, causing heavy hydrocarbons to liquefy. These heavy hydrocarbons are then removed as a heavy hydrocarbon fraction.

Such a partial condensation as described can be realized with different process steps such as refrigeration, expansion, absorption or, particularly in natural gas treatment, cryogenic absorption. In some cases, the hydrocarbon-rich gas mixture to be liquefied comprises a sufficiently high content of components with an intermediate boiling range, for example propane, butane and/or pentane, which during cooling of the gas mixture also undergo a sufficient liquefaction and thus effectively act as a solvent for the heavy hydrocarbons to be removed. Particularly in so-called lean natural gas, such components are only present in small amounts, and a sufficient depletion by partial condensation via cryogenic absorption is generally not possible.

For several reasons, processes including an adsorptive removal of heavy hydrocarbons from hydrocarbon-rich gas mixtures have been proposed as an alternative to partial condensation, particularly for treating lean natural gases.

For example, WO 2013/116627 A1 discloses a process for removing heavy hydrocarbons from a natural gas stream which comprises passing the natural gas stream through a temperature swing adsorption unit to adsorb heavy hydrocarbons and water, regenerating the temperature swing adsorbent by heating to form a contaminated gas phase, cooling the contaminated gas phase to separate water and heavy hydrocarbon liquids to form a third gas phase, and directing the third gas phase to a pressure swing adsorption unit to adsorb heavy hydrocarbons from the third gas phase. The product from the pressure swing adsorption unit can be sent to a pipeline or recycled to the temperature swing adsorption unit.

State of the art adsorptive removal of heavy hydrocarbons and water requires considerable amounts of energy during regeneration. It is therefore an object of the present invention to increase the efficiency in the removal of heavy hydrocarbons from hydrocarbon-rich gas mixtures using temperature swing adsorption.

### Disclosure of the invention

Against this background, the present invention proposes a process for removing unwanted components from a gas mixture, particularly for removing heavy hydrocarbons from a hydrocarbon-rich gas mixture, particularly from natural gas, and corresponding apparatus comprising the features of the independent claims. Advantageous embodiments of the present invention are the subject of the dependent claims and of the description that follows.

An essential feature of the present invention is recovering excess heat and using it for adsorbent regeneration, i.e. a regeneration using a regeneration gas which is heated partially using the recovered heat from the regeneration gas downstream the adsorption vessel that is undergoing regeneration, and an advanced process scheme during the regeneration step to reduce the average energy demand as well as the high energy fluctuations in an adsorption-based removal process of the unwanted components.

According to the present invention, particularly the efficiency of the process is increased and the energy demand is reduced. The present invention is particularly useful to remove heavy hydrocarbons (e.g. hydrocarbons with five or more carbon atoms per molecule) of the type mentioned particularly from natural gas, which optionally was treated by suitable treatment steps such as carbon dioxide removal and so-called sweetening. However, such components, particularly water, can also be removed in the process according to the present invention. A component such as carbon dioxide may either simply be passed through the adsorption steps which are proposed according to the present invention and is therefore not necessarily removed before. It can then be removed in a downstream sink for carbon dioxide, such as an absorption unit. Optionally, carbon dioxide may also be removed upstream and therefore is not passed to the unit according to the invention in such cases. The specific way of carbon dioxide removal, if necessary, may particularly depend from the gas mixture treated. For example, a gas mixture like air may be treated differently from a gas mixture such as natural gas.

According to the present invention, a process for removal of unwanted components from a feed gas mixture comprising the unwanted components and further components to be transferred into a purified gas mixture is proposed. According to the present invention, particularly a hydrocarbon-rich gas mixture such as natural gas may be used as the feed gas mixture, the hydrocarbon-rich gas mixture comprising heavy hydrocarbons with at least five or six carbon atoms and/or water as the unwanted components and lighter hydrocarbons as the further components. As the hydrocarbon-rich feed gas mixture, as mentioned, particularly natural gas, especially lean natural gas, or a different gas mixture of similar composition can be used. The present invention can also be used for other feed gas mixtures, as already mentioned at the outset.

The gas mixture may particularly contain high amounts of nitrogen. The hydrocarbon-rich feed gas mixture, which is used according to a preferred embodiment of the present invention, may particularly contain 0.005 to 4 mol%, particularly 0.01 to 2 mol%, of said heavy hydrocarbons, including hydrocarbons with optionally five and also six, seven, eight, nine or more carbon atoms. The heavy hydrocarbons may particularly include benzene, toluene and/or xylol, particularly in a content from 0.0005 to 0.2 mol%. The gas may further particularly contain more than 10 ppm of water and may especially be saturated with water under the conditions used. The feed gas mixture may contain 5 to 99.995 mol%, particularly 20 to 95 mol% of said lighter hydrocarbons. Particularly, the hydrocarbon-rich feed gas mixture may contain 0.1 to 99.995 mol%, particularly 1 to 95 mol%, of methane and/or nitrogen. A content of hydrocarbons with two to four or five carbon atoms, i.e. the lighter hydrocarbons, may particularly be in the range from 0.5 to 20 mol%, particularly from 1 to 10 mol%, these hydrocarbons particularly including 0.1 to 20 mol% of hydrocarbons with two, 0.1 to 20 mol% of hydrocarbons with three, 0.1 to 5 mol% of hydrocarbons with four, and 0.05 to 2 mol% of hydrocarbons with five carbon atoms.

In the terminology used herein, liquids and gases may be enriched or depleted in one or more components, these terms referring to a content in a liquid or gas from which the liquid or gas under consideration was obtained. The liquid or gas is enriched if it contains at least 1.1 times, 1.5 times, 2 times, 5 times, 10 times, 100 times or 1000 times the content, and depleted if it contains at most 0.9 times, 0.5 times, 0.1 times, 0.01 times or 0.001 times the content of a corresponding component, relative to the liquid or gas it was derived from.

The present disclosure uses the terms pressure level and temperature level to characterise pressures and temperatures, the purpose of which is to express that pressures and temperatures need not be used in the form of exact pressure or temperature values in order to realise the inventive concept. However, such pressures and temperatures are typically within certain ranges around an average or set value. Corresponding pressure levels and temperature levels may be in disjoint ranges or in ranges that overlap. In particular, pressure levels include unavoidable pressure losses. The same applies to temperature levels. The pressure levels indicated here in bar and/or Pa are absolute pressures. For example, the feed gas mixture treated according to the present invention may be provided at a pressure level in a range of e.g. 20 to 100 bar (abs.), with a fluctuation margin of e.g. up to 5 bar.

In the process according to the present invention, a temperature swing adsorption unit comprising three adsorption vessels is used. In one embodiment of the present invention, a minimum of three adsorption vessels is used as explained hereinbelow, but the present invention is not limited to using exactly three adsorption vessels in this connection. At any time, if specific reference is made to "a" or "one" adsorption vessel being used in a certain way, this is not intended to be limiting but may also include more than one adsorption vessel, particularly operated in parallel in each case, unless specifically indicated otherwise.

Temperature swing adsorption (TSA) is, as generally known, an adsorptive process for the separation of gas mixtures in which the adsorbent used is regenerated using thermal energy. Temperature swing adsorption is used, for example, for waste gas purification or for processing gas mixtures such as, like in embodiments of the present invention, natural or synthesis gas. Other gas mixtures can also be separated in a corresponding manner by means of thermal swing adsorption, for example gas mixtures such as biogas or waste gases from chemical or physical gas scrubbing processes such as rectisol or amine scrubbing, provided that their composition is suitable for the separation. The present invention is not limited to the use of certain adsorbents or gas mixtures, provided that they fall under the scope of the independent claims. Examples of gas mixtures treatable accordingly have been given above.

Temperature swing adsorption makes use of the temperature dependence of adsorption processes. For adsorbing certain components of a gas mixture, a stream formed from the gas mixture, which hereinafter is referred to as an "adsorption gas stream", is passed through an adsorbent accommodated in a container which herein is referred to as an "adsorption vessel". This is done at a lower temperature level in an operating mode also referred to as an "adsorption cycle" with respect to the specific adsorption vessel. As a consequence, the adsorbent is loaded with the adsorbing components to be separated from the adsorption gas stream. In a subsequent operating cycle, the adsorbent is regenerated by desorbing these components by heating, i.e. by introducing thermal energy. This operating cycle is also referred to as the "regeneration cycle". After the heating phase, the adsorption vessel needs to be cooled, in order to be prepared for being operated in a subsequent adsorption step. In the context of the description herein, this cooling phase is referred to as being part of the regeneration phase, cycle or mode. The cooling phase could, in the alternative, also be described as a phase separate to the actual regeneration phase and the present invention is not limited by these interchangeble definition alternatives.

For the continuous operation of a temperature swing adsorption apparatus, at least two adsorption vessels are required, such that the gas mixture to be treated may always be passed through at least one of the adsorption vessels. This does not necessarily mean that there are only phases in which exactly one adsorption vessel is used for adsorption. Rather, phases may be present in which two or more adsorption vessels, particularly in larger arrangements, can be operated in an adsorption mode.

Temperature swing adsorption can be used in particular in systems with components that have high affinities. The cycle times of the explained operating cycles are usually several hours. Temperature swing adsorption is generally used to remove components with a low concentration from gas mixtures and is typically less suitable for removing higher concentrated components.

In temperature swing adsorption, in other words, a suitable gas stream which is hereinafter referred to as a "regeneration gas stream" is passed in the regeneration cycle in heated form directly over the adsorbent. The regeneration gas stream desorbs and absorbs the components previously adsorbed to the adsorbent. The regeneration gas can classically be a purified process product, for example steam or nitrogen or natural gas depleted in heavy hydrocarbons. The use of other regeneration gases is also possible. Subsequent to such a regeneration phase, a cooling phase is present, in order to prepare the adsorbent for use in subsequent adsorption cycle. As mentioned, hereinafter the heating and cooling phases are considered to form part of the regeneration cycle.

The method according to the present invention, in yet other words, like regular temperature swing adsorption methods just described, comprises cyclically operating the temperature swing adsorption unit in successive operation modes, in each of which a different one of the at least two adsorption vessels is operated in an adsorption mode or cycle while a further one of the at least two adsorption vessels previously operated in the adsorption mode is operated in a regeneration mode or cycle. As mentioned, also more than one adsorption vessel can be operated in this manner, particularly if a larger number of adsorption vessels is present, and adsorption vessels may be operated in parallel. The adsorption mode comprises forming an adsorption gas stream using a part of the feed gas mixture and passing the adsorption gas stream through the adsorption vessel operated in the adsorption mode. The adsorption gas stream leaving the adsorption vessel operated in the adsorption mode, which is depleted in the unwanted components like the heavy hydrocarbons in an embodiment of the invention, may then be used in forming the purified gas mixture, which may then be used as a product stream and/or may be withdrawn for other uses or treatments such as liquefaction. The regeneration mode comprises passing a regeneration gas stream through the adsorption vessel operated in the regeneration mode.

According to the present invention, the regeneration gas stream is formed using a further part of the feed gas mixture and/or a part of the purified gas mixture, which is in embodiments of the present invention either passed through a further adsorption vessel or not. Heating duty for the regeneration mode, according to the present invention, is at least partly provided by recovering heat from regeneration gas leaving the vessel which is regenerated by it (i.e. downstream the vessel which is in the heating phase). In particularly favourable embodiments at least three adsorption vessels are used, one of which is operated in an adsorption mode, one is cooled after a heating phase of the regeneration mode and one is operated in the heating phase of the regeneration mode. During the heating phase, the regeneration gas stream is heated to a desorption temperature level of 80 to 350 °C, particularly 120 to 290 °C, and is thereafter passed through the adsorption vessel operated in the regeneration mode.

According to the present invention, the regeneration mode further comprises a cooling phase subsequent to the heating phase in which the regeneration gas stream is passed through the adsorption vessel operated in the regeneration mode without being heated to the desorption temperature level. It particularly may not receive any temperature-influencing treatment, but e.g. may also be cooled before being used accordingly. In particularly advantageous embodiments, the heat to be recovered from the regeneration gas stream downstream the vessel in the heating phase is transferred to the regeneration gas stream using a heat exchanger such as a plate heat exchanger, a tube bundle heat exchanger or any type of heat exchanger. In preferred embodiments, the cooling gas stream of one vessel may be used as the regeneration gas stream for another adsorption vessel. In such embodiments, it may be necessary to provide further heat to the regeneration gas stream before passing it into the vessel to be regenerated in order to account for heat losses. At least a part of this energy may be withdrawn from downstream the vessel in the heating phase, as this regeneration gas, which is loaded with desorbed unwanted components from the adsorption gas stream, needs to be cooled in order to knock out these unwanted components. These variants may also be combined with one another. Alternatively or additionally, recovered heat may also be stored for a subsequent regeneration cycle e.g by heating a heat storage medium and storing the heated medium.

At least a part of the regeneration gas stream may be recycled and used in forming the adsorption gas stream. Herein, the terms "heating phase" and "heating step" are used interchangeably and are intended to have the same meaning. The same is the case for the terms "cooling phase" and "cooling step".

Specifically, the present invention comprises, in one aspect, a method of operating a temperature swing adsorption apparatus with three adsorption vessels, the method comprising operating each of the adsorption vessels alternatingly and offset to the other adsorption vessels in an adsorption mode, comprising passing an adsorption gas stream through one of the adsorption vessels on a first temperature level, thereby adsorbing components of the adsorption gas stream to one or more adsorbents inside the adsorption vessel, and generating a purified gas stream, and a regeneration mode, comprising passing, during a first regeneration period, a regeneration gas stream at a second temperature level, which is higher than the first temperature level, through the adsorption vessel, thereby desorbing the components of the adsorption gas stream previously adsorbed to the adsorbent or adsorbents in the adsorption vessel and enriching the regeneration gas stream in these components, and thereafter passing, during a second regeneration period, a cooling gas stream at a third temperature level through the adsorption vessel, wherein the third temperature level is the same as or lower than the first temperature level, until the adsorption vessel is sufficiently cooled down. Particularly, the adsorption vessel may be considered cooled down sufficiently, when the temperature reached by cooling with the cooling gas differs by less than 20 °C, 10 °C or preferably less than 5 °C from the first temperature level.

According to the present invention, the regeneration gas stream is heated, during a partial phase of the first regeneration period, to the second temperature level using heat recovered from the heated regeneration gas stream downstream the vessel being heated in the first regeneration period. This enables energy savings due to heat integration. Energy required for cooling the regeneration gas stream downstream the heated vessel is decreased by the same amount as energy required for heating the regeneration gas upstream the heated vessel during this period. Additionally, thermal stress in process equipment is decreased as the inlet temperatures of heater and cooler for the respective streams fluctuate substantially less in comparison to conventional concepts.

Preferably, when a first one of the adsorption vessels is operated in the first regeneration period and a second one of the adsorption vessels is operated in the second regeneration period, the cooling gas stream withdrawn from the second one of the adsorption vessels is at least partially used in forming the regeneration gas stream for the first one of the adsorption vessels. Thereby, heat removed from the cooled vessel is directly recycled to the process and less energy is needed.

Advantageously, at any time, one adsorption vessel is in the adsorption mode, thereby enabling continuous operation.

Particularly, the partial phase of the first regeneration period during which the regeneration gas stream is heated using the heat recovered from the heated regeneration gas stream downstream the vessel being heated in the regeneration mode is a second partial phase preceded by a first partial phase during which the regeneration gas stream is not heated using the heat recovered from the heated regeneration gas stream downstream the vessel being heated in the regeneration mode. This further decreases temperature fluctuations as in the beginning of a heating phase, the outlet temperature of the respective vessel is still low. Only after a certain time (required for passing the regeneration gas stream from the inlet to the outlet of the vessel), the temperature at the outlet rises. At the same time, a similar phenomenon can be observed during the cooling phase. In the beginning of the cooling phase, the outlet temperature of the cooled vessel is substantially equivalent to the second temperature level, since the cooling gas stream requires a certain time to travel through the vessel. In such a situation, heat cannot be transferred from the (cold) regeneration gas stream downstream the heated vessel to the (hot) cooling gas stream downstream the vessel being cooled.

In such a case, therefore, the method preferably includes, during the second partial phase, passing at least a part of the regeneration gas downstream the vessel being heated in the regeneration mode through a heat exchanger through which at least a part of the regeneration gas stream is passed upstream the vessel being heated in the regeneration mode, and includes, during the first partial phase, bypassing the heat exchanger with the regeneration gas stream upstream and/or downstream the vessel being heated in the regeneration mode.

Preferably, heat is recovered from downstream the vessel being heated when the temperature downstream the heated vessel exceeds, preferably by at least 1, 3, 10, 30 or 100 °C, the temperature of the cooling gas stream downstream the cooled vessel. In such cases, heat can be efficiently transferred.

Particularly, the temperature swing adsorption apparatus is used for treating a natural gas stream including heavy hydrocarbons with a carbon number as mentioned. In other words, the adsorption gas stream and/or the regeneration gas stream may be formed from such a natural gas stream containing such heavy hydrocarbons. This is a particularly relevant application of temperature swing adsorption.

In another aspect, the invention comprises a temperature swing adsorption apparatus with three adsorption vessels, each configured to be alternatingly operated in an adsorption mode, comprising passing an adsorption gas stream through at least one of the adsorption vessels on a first temperature level, thereby adsorbing components of the adsorption gas stream to an adsorbent inside the adsorption vessel, and generating a purified gas stream, and in a regeneration mode, comprising passing, during a first regeneration period, a regeneration gas stream at a second temperature level, which is higher than the first temperature level, through the adsorption vessel, thereby desorbing the components of the adsorption gas stream previously adsorbed to the adsorbent and enriching the regeneration gas stream in these components, and thereafter passing, during a second regeneration period, a cooling gas stream at a third temperature level through the adsorption, wherein the third temperature level is the same as or lower than the first temperature level, until the adsorption vessel is sufficiently cooled down in the sense explained herein before.

According to the invention, the apparatus comprises a heat exchanger (herein also referred to as "economizer") configured to transfer heat from the regeneration gas downstream a vessel operated at the second temperature level to the regeneration gas stream upstream a vessel being operated at the second temperature level.

Preferably, the apparatus further comprises a switchable bypass configured to conduct the regeneration gas stream into the vessel being operated at the second temperature level without passing through said heat exchanger and/or a switchable bypass configured to withdraw the regeneration gas stream from the vessel being operated at the second temperature level without passing through said heat exchanger.

The apparatus preferably comprises a controller configured to switch the bypass(es) depending on a temperature difference between the regeneration gas stream downstream the vessel operated at the second temperature level and the cooling gas stream downstream the vessel being operated at the third temperature level.

Particularly, the apparatus is configured to carry out a method as set out herein before. Accordingly, the apparatus profits from the same advantages as the method described above and specific reference is made to the description above.

### Brief description of the drawings

Figure 1 shows an example of an adsorption apparatus in a schematic diagram.
Figure 2 shows an advantageous embodiment of the invention in a schematic diagram.
Figure 3 shows an exemplary temperature evolution within an adsorption apparatus.
Figure 4 shows an exemplary temperature evolution observable when operating an embodiment of the current invention.

### Detailed description

Embodiments of the invention are described with reference to the appended drawings. References to apparatus components may also refer to process steps carried out therein and vice versa. Identical reference numerals may be used in several figures for identical or functionally corresponding parts. A repeated description of such repeated features is omitted for reasons of conciseness and readability.

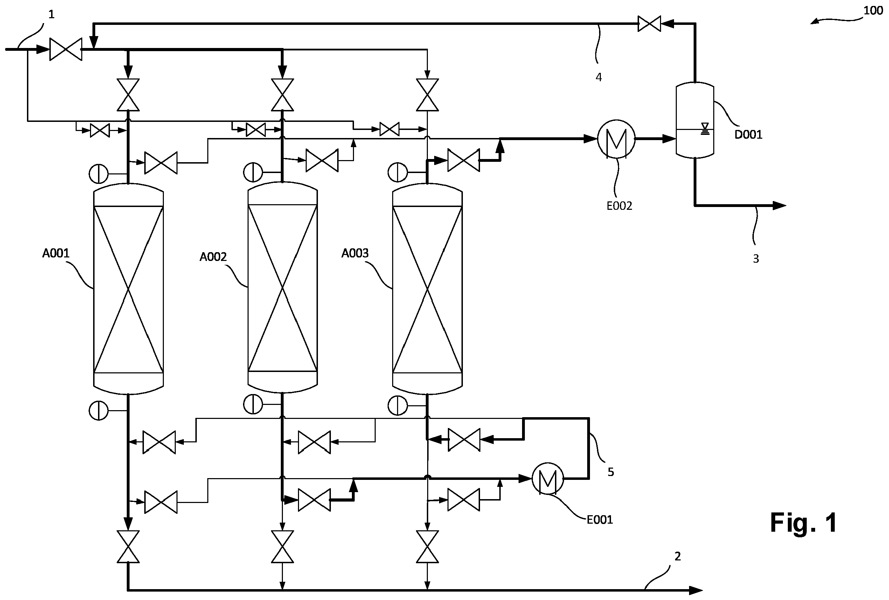

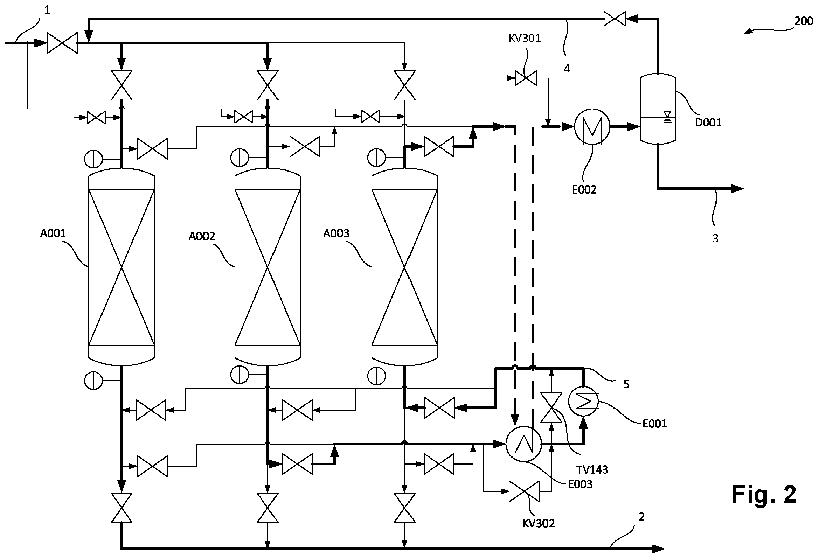

For removal of condensable components like heavy hydrocarbons or water with a temperature swing adsorption (TSA) unit, the process scheme illustrated in Fig. 1 and collectively referred to with 100 is common and state of the art. In the illustrated example, the apparatus 100 comprises three adsorption vessels A001, A002 and A003, which may be operated in an adsorption mode at a first temperature level to remove adsorbable substances from a feed fluid or gas 1 to form a product gas 2 which is depleted in the adsorbable components and enriched in the remaining components of feed gas 1. The vessels A001, A002, A003 are also operable in a regeneration mode as set out above, which comprises a heating step and a subsequent cooling step. In the example shown, a first adsorption vessel A001 is operated in the adsorption mode, whereas a second A002 and third A003 vessel are operated in the regeneration mode, wherein the second vessel A002 is in the cooling step of the regeneration mode and the third vessel A003 is in the heating step of the regeneration mode. In Figures 1 and 2, active connections are illustrated as thick lines, whereas thin lines represent alternative (inactive) connections.

After a period of operating a vessel A001, A002, A003 in the adsorption mode, adsorbed components of feed gas 1 need to be removed from the adsorber. This is typically accomplished by heating the respective adsorber, as already described herein above. As shown in the process scheme 100, two heat exchangers are needed. One (E001) for heating a regeneration gas 5 (e.g. a gas stream derived from feed gas 1) to the required regeneration gas temperature (second "high" temperature level, usually above 250°C or above 200°C) and a second one (E002) for cooling the hot regeneration gas loaded with the desorbed components to a temperature where those components condense (low temperature level, usually below 40°C or below 30°C).

In order to remove the condensed desorbed compnents, the cooled regeneration gas stream is sent to a knock out drum D001 downstream the cooler E002. The condensed phase may be withdrawn from said drum D001 as a stream 3, while a remaining gas phase (mainly comprising components of the regeneration gas stream 5) may be withdrawn from drum D001 as a recycling stream 4. This recycling stream 4 may be recycled to the feed stream 1 and (re)used as an adsorption gas stream.

In the embodiment shown, fresh feed 1 and recycling stream 4 are connected to each other via a valve in order to account for any pressure difference between the two streams. Thereby, the necessity for a compressor or blower in the recycling stream conduit is avoided.

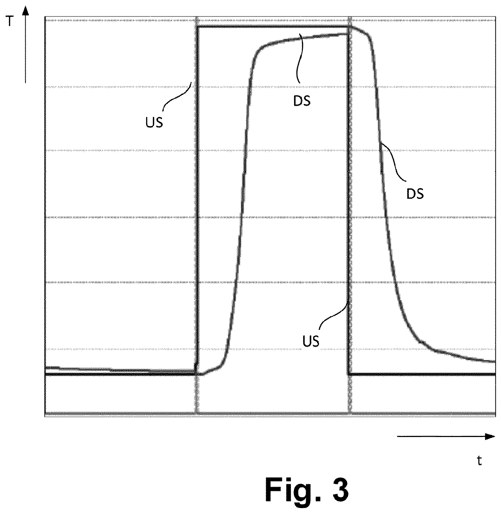

Due to the cyclic operation mode of the process 100 the inlet temperatures to the heat exchangers E001, E002 fluctuate significantly between the low and the high temperature level. This is because the inlet temperature to the heater (E001) is the outlet temperature of the adsorber vessel A002 during the cooling step and the inlet temperature to the cooler (E002) is the outlet temperature of the adsorber vessel A003 during the heating step. The trend of these temperatures is shown in Fig. 3. Therefore, for both heat exchangers E001 and E002, the temperature difference between inlet and outlet can be temporarily up to 250°C or even higher, which results in a significant energy demand for the cooling and heating provided by the respective heat exchanger E001, E002. Further the fluctuating inlet temperatures are challenging for the design of the heat exchangers, e.g. in terms of material choice and combination, due to the induced thermal stress.

The present invention introduces a new process scheme that enables high energy recovery and therefore a much more efficient process with lower energy demand. In addition, a new control logic is introduced that reduces thermal stress prolonging the equipment's life time. The application of such concept is not limited to the TSA process shown in Fig. 1 but can be applied to other applications with similar boundary conditions.

In Fig. 3, typical temperature (T) trends overtime (t), observable with a process 100 as illustrated in Fig. 1, are illustrated for the regeneration gas stream upstream US and downstream DS a vessel A001, A002, A003 during the adsorption (A1) heating (H1) and cooling (C1) phases. It is to be noted, that upstream (US) and downstream (DS) locations change during the phase changes, since the regeneration gas stream 5 during the heating phase H1 flows in the opposite direction, as compared to the adsorption gas stream 1 and the regeneration gas stream during the adsorption and cooling phases, respectively.

In Fig. 2, an exemplary embodiment of the invention is schematically illustrated and collectively referred to with 200. The apparatus 200, in addition to components used in the apparatus 100 of Fig. 1, further comprises a process gas heat exchanger economizer E003 and three bypass valves TV143, KV302 and KV301. The function of the heat exchangers are as follows:
- E001: process gas heater (heat exchanger between process gas and heat source, e.g. directly fired heater, electrical heater, or the like)
- E002: process gas cooler (heat exchanger between process gas and a cooling agent, e.g. air, cooling water etc.)
- E003: process gas economizer (heat exchanger between process gas leaving the vessel that is undergoing the cooling step and process gas leaving the vessel that is undergoing the heating step)

Using the process gas economizer, heat can be recovered during the time in which the temperature of the gas leaving the vessel A003 that is undergoing the heating step is higher than the inlet temperature to E001. On the other hand, it would be counterproductive if the economizer E003 is used during the time in which the temperature of the gas leaving the vessel A003 that is undergoing the heating step is lower than the inlet temperature of E001. Therefore, a control logic is required to determine the time in which the economizer E003 is used in order to maximize the heat recovery.

There are two different states during a regeneration (heating + cooling) cycle. The state is determined by the valve positions:
State a): Process gas leaving the vessel A002 that is undergoing the cooling step is sent to E001. In addition, the process gas leaving the vessel A003 that is undergoing the heating step is sent to E002.
State b): Process gas leaving the vessel A002 that is undergoing the cooling step is sent to process gas economizer E003. In addition, process gas leaving the vessel A003 that is undergoing the heating step is also sent to E003.

During state a) the economizer E003 is by-passed (via vlaves KV301, KV302) and no heat transfer is conducted. This state is essentially equivalent to the state-of-the-art process (see figure 1) in which no process gas economizer E003 is used. During state b) the gas that is leaving the vessel A002 that is undergoing the cooling step is sent to process gas economizer E003. Afterwards the process gas may be conducted to E001 for additional heating. In addition, the process gas that is leaving the vessel A003 that is undergoing the heating step is also conducted to E003. Afterwards, this process gas is conducted to E002 for further cooling. This means, that in this example, only during state b), heat is transferred in the process gas economizer E003. In the early part of the regeneration cycle of said TSA process the inlet temperatures to E001 and E002 are close to the respective outlet temperatures and therefore no heat recovery is necessary. That is, since in the early part of the cooling step, the gas leaving the vessel is still hot. Also, in the early part of the heating step the gas leaving the vessel is still cold. Consequently, it is efficient to choose state a) during this time, since the heating energy required for bringing the regeneration gas leaving the vessel A002 being cooled to the second temperature level required for desorbing adsorbed species in vessel A003 is low.

In the later part of the regeneration cycle of said TSA process 200 the situation changes, because the gas leaving the vessel A002 in the cooling step becomes cold and the gas leaving the vessel A003 in the heating step becomes hot. In other words, much energy is needed to cool the regeneration gas downstream of vessel A003 and to heat it upstream of vessel A003, respectively. Therefore, it is efficient to route both process gases to the process gas economizer E003 to recover heat. This part of the regeneration cycle would represent the above described state b)

The decision, which of the two states is used is decided using a control logic. This control logic may, for example, constantly measure the outlet temperature of the process gas of the vessel A002 that is undergoing the cooling step as well as the outlet temperature of the vessel A003 that is undergoing the heating step. This control logic may then decide, e.g. according to a predefined set point, exactly when to switch from state a) to state b). The set point for said control logic can either be a certain temperature measured at the outlet of the vessel A003 that is undergoing the heating step or at the outlet of the vessel A002 that is undergoing the cooling step as well as any combination or derived value, e.g. difference, sum, derivative etc., of both temperature measurements.

As an example, the change of state can be realized as soon as the temperature of the process gas exiting the vessel A003 that is undergoing the heating step exceeds the temperature of the process gas exiting the vessel A002 that is undergoing the cooling step.

In order to reduce thermal stress, at some times it may be desirable to provide temperature ramps rather than a gas stream with the target temperature to a vessel to be heated. A bypass valve TV143 is provided for that purpose. Using this valve TV143 enables adjusting the temperature ramping time and rate. Thereby, it is possible to better control the inlet temperature of the vessel to be heated, especially in the beginning of the heating phase.

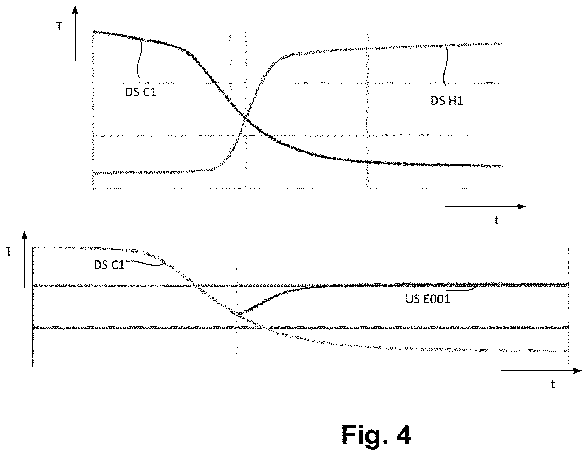

Figure 4 illustrates the temperature trends described above. The upper diagram corresponds to the downstream curves of figure 3 but for different vessels of which one is in the heating phase (DS H1) and one is in the cooling phase (DS C1). The dashed vertical line indicates the point in time in which the temperature downstream the vessel in the heating step equals the temperature downstream the cooling step. This may be chosen as the time in which to switch from state a) to state b). The resulting temperature profile that is routed to E001 to be in contact with the heat source is schematically shown in the lower diagram of Fig. 4, where DS C1 represents the state without the use of the economizer E003 and US E001 represents a temperature profile resulting from heat transfer from the gas downstream of the heated vessel to the gas downstream of the cooled vessel (i.e. in state b), as described above).

The bypass valves KV301 and KV302 are not only used to decide the state of the process but are also crucial to prolong the equipment's life. At the end of state b) the path going from the adsorber undergoing the cooling step (e.g. A002) to E003 has a cold temperature since this represents the end of the cooling step. On the other hand, the path going from the adsorber undergoing the heating step (e.g. A003) to E003 has a high temperature since this also represents the end of the heating step. If only one of the bypass valves KV301 or KV302 is foreseen, then during the switch from state b) to state a) the path without the bypass valve would be exposed to high thermal stresses, since at the beginning of state a) the temperature of the gas going to E003 has a significantly different temperature which can differ by up to 150°C or even higher. Using both bypass valves during state a) protects the process gas economizer E003 from high temperature swings and therefore high thermal stress. The temperature difference to E003 when switching from state a) to state b) can be significantly reduced to values below 150°C.

It is to be understood that all of the vessels A001, A002 and A003 need to be operated in the regeneration mode cyclically. Preferrably, at any time, at least one vessel is in the adsorption mode to ensure continuous operation. It is further preferred to time the regeneration of vessels such that always one vessel is in the cooling phase while another vessel is in the heating phase of the regeneration mode, to maximize the above described benefits. Therefore, the above referenced numerals of vessels are simply a snapshot of the process 200 and any vessel can be the vessel in the cooling phase, the heating phase or the adsorption mode.

In another embodiment of the present innovation, a constant heater duty is envisioned. This allows for a simpler and less complex design of E001. In this case the temperature to the vessel that is undergoing the heating step will fluctuate, but such fluctuations do not represent a significant challenge to the design of the process. The heating duty is estimated such that even for the lowest incoming temperature the heater can heat up the gas to the minimum required temperature. This concept is not only applicable to constant heating duties but can also be used with any type of simple heating duty curves, e.g. a sinus shape.

## Claims

1. Method of operating a temperature swing adsorption apparatus with three adsorption vessels, the method comprising operating each of the adsorption vessels alternatingly and offset to the other adsorption vessels in
- an adsorption mode, comprising
passing an adsorption gas stream through the adsorption vessel on a first temperature level, thereby adsorbing components of the adsorption gas stream to one or more adsorbents provided inside the adsorption vessel and generating a purified gas stream, and
- a regeneration mode, comprising
passing, during a first regeneration period, a regeneration gas stream at a second temperature level, which is higher than the first temperature level, through the adsorption vessel, thereby desorbing the components of the adsorption gas stream previously adsorbed to the one or more adsorbents provided inside the adsorption vessel and enriching the regeneration gas stream in these components, and thereafter
passing, during a second regeneration period, a cooling gas stream at a third temperature level through the adsorption vessel, wherein the third temperature level is higher than, the same as or lower than the first temperature level, until the adsorption vessel is sufficiently cooled down,
**characterized in that**
the regeneration gas stream is heated, during a partial phase of the first regeneration period, to the second temperature level using heat recovered from the heated regeneration gas stream downstream the vessel being heated in the first regeneration period.

2. The method according to claim 1, wherein, when a first one of the adsorption vessels is operated in the first regeneration period and a second one of the adsorption vessels is operated in the second regeneration period, the cooling gas stream withdrawn from the second one of the adsorption vessels is at least partially used in forming the regeneration gas stream for the first one of the adsorption vessels.

3. The method according to claim 1 or 2, wherein, at any time, one adsorption vessel is in the adsorption mode.

4. The method according to any one of the preceding claims, wherein the partial phase of the first regeneration period during which the regeneration gas stream is heated using the heat recovered from the heated regeneration gas stream downstream the vessel being heated in the regeneration mode is a second partial phase preceded by a first partial phase during which the regeneration gas stream is not heated using heat recovered from the heated regeneration gas stream downstream the vessel being heated in the regeneration mode.

5. The method according to claim 4, including, during the second partial phase, passing at least a part of the regeneration gas downstream the vessel being heated in the regeneration mode through a heat exchanger through which at least a part of the regeneration gas stream upstream the vessel being heated in the regeneration mode is passed, and including, during the first partial phase, bypassing the heat exchanger with the regeneration gas stream upstream and/or downstream the vessel being heated in the regeneration mode.

6. The method according to any preceding claim, wherein heat is recovered from downstream the vessel being heated when the temperature downstream the vessel being heated exceeds, preferably by at least 1, 3, 10, 30 or 100 °C, the temperature of the cooling gas stream downstream the vessel being cooled.

7. The method according to any preceding claim, wherein the temperature swing adsorption apparatus is used for treating a natural gas stream including heavy hydrocarbons with a carbon number of five or more....

8. Temperature swing adsorption apparatus with three adsorption vessels, each configured to be alternatingly operated in
- an adsorption mode, comprising
passing an adsorption gas stream through at least one of the adsorption vessels on a first temperature level, thereby adsorbing components of the adsorption gas stream to one or more adsorbents provided inside the adsorption vessel, and generating a purified gas stream, and
- in a regeneration mode, comprising
passing, during a first regeneration period, a regeneration gas stream at a second temperature level, which is higher than the first temperature level, through the adsorption vessel, thereby desorbing the components of the adsorption gas stream previously adsorbed to the one or more adsorbents and enriching the regeneration gas stream in these components, and thereafter
passing, during a second regeneration period, a cooling gas stream at a third temperature level through the adsorption vessel, wherein the third temperature level is higher than, the same as or lower than the first temperature level, until the adsorption vessel is sufficiently cooled down,
the apparatus being **characterized by**
a heat exchanger configured to transfer heat from the regeneration gas downstream a vessel operated at the second temperature level to the regeneration gas stream upstream a vessel being operated at the second temperature level.

9. The apparatus according to claim 8, further comprising a switchable bypass configured to conduct the regeneration gas stream into the vessel being operated at the second temperature level without passing through said heat exchanger and/or a switchable bypass configured to withdraw the regeneration gas stream from the vessel being operated at the second temperature level without passing through said heat exchanger.

10. The apparatus according to claim 9, comprising a controller configured to switch the bypass(es) depending on a temperature difference between the regeneration gas stream downstream the vessel operated at the second temperature level and the cooling gas stream downstream the vessel being operated at the third temperature level.

11. The apparatus according to any of claims 8 to 10 further being configured to carry out the method set out in any of claims 1 through 7.
